(19) **Europäisches Patentamt**
**European Patent Office**
**Office européen des brevets**

(11) **EP 2 402 799 B1**

(12) **EUROPEAN PATENT SPECIFICATION**

(45) Date of publication and mention
of the grant of the patent:
**20.01.2016 Bulletin 2016/03**

(51) Int Cl.:
***G02B 6/036*** $^{(2006.01)}$     ***G02B 6/02*** $^{(2006.01)}$
***G02B 6/028*** $^{(2006.01)}$

(21) Application number: **11169805.6**

(22) Date of filing: **14.06.2011**

(54) **A monomode optical fiber**

Monomode Glasfaser

Fibre optique monomode

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.07.2010 FR 1055368**

(43) Date of publication of application:
**04.01.2012 Bulletin 2012/01**

(73) Proprietor: **Draka Comteq B.V.**
**1083 HJ Amsterdam (NL)**

(72) Inventors:
• **Bigot-Astruc, Marianne**
**91460 MARCOUSSIS (FR)**
• **Sillard, Pierre**
**78150 LE CHESNAY (FR)**
• **Richard, Simon**
**91140 VILLEBON SUR YVETTE (FR)**

(74) Representative: **Algemeen Octrooi- en
Merkenbureau B.V.**
**P.O. Box 645**
**5600 AP Eindhoven (NL)**

(56) References cited:
**EP-A1- 1 477 831**     **EP-A1- 1 852 721**
**EP-A1- 1 978 383**     **WO-A1-2008/137150**
**WO-A1-2009/062131**     **WO-A2-2008/027351**
**US-A1- 2008 279 515**     **US-B2- 7 254 305**

• **BIGOT-ASTRUC M ET AL: "trench-Assisted
Profiles for Large-Effective-Area Single-Mode
Fibers", ECOC2008, ECOC, BRUSSELS, 21-25
SEP 2008, ECOC, BRUSSELS EXPO, BELGIUM,
21 September 2008 (2008-09-21), XP001524535,
ISBN: 978-1-4244-2228-9**

**Description**

The present invention relates to the field of optical fiber transmission and more specifically to an optical fiber having an enlarged effective area without this increasing its bending losses.

Generally speaking, in the field of optical fibers the effective area concept was introduced for calculating non-linear effects. It usually corresponds to the usable section of an optical fiber, defined on the basis of the modal distribution of the field propagating in the fiber.

By way of non-limiting example, the effective area Aeff is defined as follows:

$$\text{Aeff} = 2\pi \frac{\left( \int_0^\infty |F(r)|^2 \, r dr \right)^2}{\int_0^\infty |F(r)|^4 \, r dr}$$

where F(r) is the modal distribution of the fundamental mode LP01 at the radius $r$, i.e. at the polar distance $r$ in the polar coordinates of a point in a system of axes transverse to and centered relative to the fiber.

Moreover, the refractive index of an optical fiber is generally qualified as a function of the shape of the graph of the refractive index as a function of the radius of the fiber. It is conventional to represent the distance $r$ to the center of the fiber along the abscissa axis and the difference between the refractive index at the distance $r$ and the refractive index of the outer cladding of the fiber up the ordinate axis. The outer cladding providing optical cladding has a substantially constant refractive index; this optical cladding generally consists of pure silica but may also contain one or more doping agents. Thus refractive index profiles are described as step-shape profiles, trapezium-shape profiles, parabola-shape profiles (also known as alpha-shape profiles and graded-index profiles) or triangular-shape profiles where the graphs have the shape of a step, a trapezium, a parabola or a triangle, respectively. These curves generally represent the theoretical or setpoint profile of the fiber, as in practice fiber fabrication constraints can yield a slightly different profile.

An optical fiber conventionally consists of an optical core for transmitting and possibly amplifying an optical signal and an optical cladding, also called the outer cladding, for confining the optical signal within the core. To this end, the refractive indices $n_c$ of the core and $n_g$ of the cladding are such that $n_c > n_g$. As is well known in the art, an optical signal propagates in a monomode optical fiber in a fundamental mode (LP01 mode) guided in the core and in guided secondary modes, called cladding modes, at a certain distance in the core-cladding assembly.

The core may consist of a plurality of zones, including:

- a central part or central core that has a radius $r_1$ and a refractive index $n_1 > n_g$; and
- a plurality of other zones between the central core and the optical cladding that have respective radii $r_i$ and refractive indices $n_i < n_1$ that may be less than or greater than the refractive index $n_g$ of the optical cladding.

A zone between the central core and the optical cladding with a refractive index close to the index $n_g$ of the optical cladding is sometimes referred to as the internal cladding and a zone with a refractive index lower than the index $n_g$ of the optical cladding is sometimes referred to as the buried cladding or trench.

Step-index fibers, also known as single-mode fibers (SMF), are conventionally used as line fibers in optical fiber transmission systems. These fibers present chromatic dispersion and chromatic dispersion slope that meet specific telecommunication standards and standardized cut-off wavelength and effective area values.

The in-cable cut-off wavelength, as defined by subcommittee 86A of the International Electrotechnical Commission in IEC Standard 60793-1-44, is the wavelength at which the optical signal is no longer propagating as a monomode signal after propagating over 22 meters of fiber. The secondary mode most resistant to bending losses is usually the LP11 mode. The in-cable cut-off wavelength is therefore the wavelength from which the LP11 mode is sufficiently attenuated after propagating over 22 meters of fiber. The method proposed by the above standard amounts to considering the optical signal as a monomode signal if the attenuation of the LP11 mode is greater than or equal to 19.3 decibels (dB). According to the recommendations of IEC subcommittee 86A set out in the IEC Standard 6793-1-44, the in-cable cut-off wavelength is determined by imposing on the fiber two loops of 40 millimeters (mm) radius and placing the rest of the fiber (21.5 meters (m) of fiber) on a 140 mm radius drum.

The effective fiber cut-off wavelength is also defined in IEC Standard 60793-1-44 and is the wavelength at which the attenuation of the LP11 mode is greater than or equal to 19.3 dB for 2 m of fiber packaged on a 140 mm radius drum.

Terrestrial transmission systems typically use standard single-mode fibers (SSMF) having positive dispersion, an effective area Aeff up to about 80 square micrometers ($\mu m^2$), and an attenuation of about 0.19 decibels per kilometer (dB/km).

Undersea transmission systems employing repeaters use hybrid transmission lines with fibers having a positive dispersion, a large effective area (about 100 $\mu m^2$ to 110 $\mu m^2$) and a low attenuation (0.17 dB/km to 0.19 dB/km) and fibers having negative dispersion.

Repeaterless undersea transmission systems typically use transmission lines comprising combinations of fibers having a positive dispersion (pure silica core fibers having an effective area in the range 80 $\mu m^2$ to 110 $\mu m^2$). Record-breaking results in terms of capacity relative to distance have recently been obtained in the laboratory with fibers having an effective area of about 120 $\mu m^2$ using coherent detection and sophisticated modulation formats.

As known in the art, increasing the effective area of a transmission fiber helps to reduce harmful non-linear effects in the fiber. A transmission fiber having a large effective area enables transmission over a greater distance and/or an increase in the operating margins of the transmission system.

However, an effective area Aeff of about 130 $\mu m^2$ at present represents the maximum limit likely to be obtained if it is also intended to guarantee a low level of bending losses and an in-cable cut-off wavelength $\lambda cc$ less than 1450 nanometers (nm), for example, and to ensure that the chromatic dispersion and the chromatic dispersion slope can be processed either by compensation modules or by coherent detection and sophisticated modulation formats.

Thus the problem that arises is to increase the effective area Aeff beyond 150 $\mu m^2$ without significantly increasing fabrication cost and without penalizing performance from the point of view of bending losses.

A secondary aim is to maintain the chromatic dispersion and the chromatic dispersion slope at values respectively less than 22 picoseconds per nanometer per kilometer (ps/nm/km) and 0.07 picoseconds per square nanometer-kilometer (ps/($nm^2$.km)) and to guarantee monomode transmission over the extended C band [1530 nm-1569 nm].

To increase the effective area of monomode fibers, step-index fiber profiles are usually employed in either constant cladding or buried cladding configurations.

Document US-A-6 658 190 describes profiles of this kind that have an effective area Aeff greater than 100 $\mu m^2$.

However, the examples described in Document US-A-6 658 190 are not optimized either in terms of bending losses or in terms of fabrication cost. Sample 5 described in Document US-A-6 658 190 has a single-mode fiber profile with constant cladding and an effective area of 155 $\mu m^2$, but its macrobending and microbending losses are unsatisfactory. Samples 6, 7, and 8 using step-index fiber and buried-cladding profiles have effective areas greater than 150 $\mu m^2$ but the outside radius of the buried cladding is very large (greater than 29 micrometers ($\mu m$)), which penalizes fabrication cost.

Document US-A-7 076 139 describes step-index and buried cladding optical fibers for which $\Delta n_1 < 4.4 \times 10^{-3}$ and Aeff $\geq$ 120 $\mu m^2$.

However, none of the examples described in Document US-A-7 076 139 uses a fiber profile making it possible to combine an increased effective area, low bending losses, and a low buried cladding outside radius. Table 2 in Document US-A-7 076 139 undoubtedly shows an example with Aeff = 156 $\mu m^2$ but the outside radius of the buried cladding is too large (approximately 31 $\mu m$), which implies a high fabrication cost.

Document US-A-6 483 975 describes fiber profiles consisting of a central core, intermediate cladding, and buried cladding having an effective area Aeff greater than 100 $\mu m^2$.

However, the radius of the central core is too small (less than 6.4 $\mu m$) and the buried cladding is too large (greater than 15 $\mu m$) and insufficiently deep (depth above -2.9 $\times 10^{-3}$) to make it possible to obtain both an effective area greater than 150 $\mu m^2$ and satisfactory bending losses. Also, the outside radius of the buried cladding is very large, which implies a high fabrication cost.

Document EP-A-1 477 831 describes in particular fiber profiles comprising a central core, an intermediate cladding, and a buried cladding, and having an effective area Aeff greater than 95 $m^2$ (in one example Aeff = 171 $\mu m^2$) and an in-cable cut-off wavelength $\lambda cc$ less than or equal to 1310 nm.

However, with such values of $\lambda cc$, it is not possible to have both an effective area Aeff greater than or equal to 150 $\mu m^2$ and good performance in terms of bending losses. Moreover, the outside diameter of the buried cladding is very large (greater than 33 $\mu m$), which greatly increases fabrication cost.

Document US-A-7 254 305 describes fiber profiles comprising a central core, an intermediate cladding, and a buried cladding, and having a chromatic dispersion slope less than 0.07 ps/$nm^2$/km and attenuation less than 0.20 dB/km.

The maximum value of the effective area Aeff disclosed in Document US-A-7 254 305 for an in-cable cut-off wavelength $\lambda cc$ of 1854 nm is 106 $\mu m^2$.

However, for the profiles described in Document US-A-7 254 305, the values of $\Delta n_1$, i.e. the index difference between the central core and the outer cladding (greater than 4.3 $\times 10^{-3}$) and $\Delta n_3$, i.e. the index difference between the trench and the outer cladding (greater than -4.3 $\times 10^{-3}$), are too high to make it possible to obtain both an effective area greater than 150 $\mu m^2$ and satisfactory bending losses.

Document EP-A-1 978 383 describes fiber profiles comprising a central core, an intermediate cladding, and a buried cladding, and having an effective area Aeff greater than or equal to 120 $\mu m^2$ and an effective fiber cut-off wavelength less than 1600 nm.

All the examples described in Document EP-A-1 978 383 have central core index differences $\Delta n_1$ greater than $3.9 \times 10^{-3}$. However, with the above constraints on the cut-off wavelength and central core index, it is not possible to achieve an effective area greater than or equal to 150 $\mu m^2$. The highest value of Aeff disclosed in Document EP-A-1 978 383 is only 135 $\mu m^2$.

Document WO-A-2008 137150 describes a fiber profile comprising a central core, an intermediate cladding, and a buried cladding, and having an effective area Aeff greater than 110 $\mu m^2$, an in-cable cut-off wavelength $\lambda$cc less than 1500 nm, and macrobending losses less than 0.7 decibels per turn (dB/turn) for a bend radius of 10 mm at a wavelength of 1550 nm.

However, such constraints on $\lambda$cc and/or bending losses do not make it possible to obtain an effective area greater than or equal to 150 $\mu m^2$. Two examples with Aeff > 150 $\mu m^2$ are given in Document WO-A-2008 137150:

- firstly, fiber 7, for which Aeff has the value 155 $\mu m^2$ and the outside radius of the buried cladding is too large (approximately 27.5 $\mu$m), which leads to a high fabrication cost; and
- secondly, fiber 8, for which Aeff has the value 167 $\mu m^2$ and the outside radius of the buried cladding is 18.5 $\mu$m; however, the macrobending losses are not optimized (they are about 10 decibels per meter (dB/m) at a wavelength of 1550 nm and greater than 0.1 dB/100 turns for a bend radius of 30 mm at a wavelength of 1625 nm). Moreover, the volume of the trench (see below) is not optimized as a function of the dimensions of the central core.

WO 2008/027351 discloses an optical fiber comprising: a glass core, a glass cladding surrounding and in contact with the core, the cladding comprising: an annular inner region, an annular ring region, and an annular outer region.

US 2008/279515 discloses an optical fiber comprising a silica-based core, said core comprising an alkali metal oxide in an average concentration in said core between about 10 and 10000 ppm by weight, and a silica-based cladding surrounding the core, said silica based cladding including at least one annular region having a lower refractive index delta than the remainder of said cladding which comprises randomly distributed voids, fluorine, or mixtures thereof, and said annular region is spaced from said core.

Thus the above-mentioned prior art proposes no satisfactory compromise as to the profile and/or propagation characteristics that would make it possible to obtain a trench optical fiber having a large effective area and relatively low macrobending and microbending losses without significantly increasing the fiber fabrication cost.

The present invention aims to propose a better compromise than the prior art between parameters that contribute to the performance of the fiber.

In particular the invention proposes using profiles comprising a central core, an intermediate cladding, a buried cladding, and optical cladding in which the core has a radius $r_1$ in the range of 6.5$\mu$m to 10$\mu$m and a refractive index difference $\Delta n_1$, relative to the optical cladding in the range $2.6 \times 10^{-3}$ to $3.5 \times 10^{-3}$ and a buried cladding outside radius less than 24 $\mu$m. It is also proposed relaxing the constraint on the in-cable cut-off wavelength $\lambda$cc of buried cladding optical fibers, i.e. to tolerate an increase in the in-cable cut-off wavelength $\lambda$cc, the value of $\lambda$cc nevertheless remaining less than or equal to 2000 nm, in order to achieve for such fibers an effective area greater than or equal to 150 $\mu m^2$ at a wavelength of 1550 nm.

It is proposed in particular to optimize the position and dimensions of the trench to enable the above-mentioned limited relaxation of the constraint on $\lambda$cc and to guarantee very low bending losses.

It is furthermore proposed, for a wavelength of 1550 nm, to maintain the chromatic dispersion at a value in the range 14 ps/nm/km to 24 ps/nm/km, or even at a value less than 22 ps/nm/km, and to maintain the chromatic dispersion slope at a value less than 0.08 ps/(nm$^2$.km), or even less than 0.070 ps/(nm$^2$.km).

To this end, the invention more particularly proposes a monomode optical fiber comprising, from the center toward the periphery, a central core, an intermediate cladding, a trench, and an optical cladding, wherein:

- the central core has a radius $r_1$ in the range of 6.5$\mu$m to 10$\mu$m and a refractive index difference $\Delta n_1$ relative to the optical cladding in the range $2.6 \times 10^{-3}$ to $3.5 \times 10^{-3}$;
- the intermediate cladding has a radius $r_2$ in the range of 8.5$\mu$m to 20$\mu$m and a refractive index difference $\Delta n_2$ relative to the optical cladding;
- the trench has a radius $r_3$ that is less than 24 $\mu$m and preferably in the range of 14 to 24 $\mu$m and has a refractive index difference $\Delta n_3$ relative to the optical cladding that is in the range $-15.0 \times 10^{-3}$ to $-4.5 \times 10^{-3}$, the volume $V_{13}$ of the trench, defined as follows:

$$V_{13} = 2\pi \left| \int_{r_2}^{r_3} \Delta n(r) r \, dr \right|$$

being in the range 170 percent square micrometers (%.$\mu m^2$) to 830 %.$\mu m^2$;

- the volume $V_{13}$ of the trench as a function of the volume $V_{11}$ of the central core, defined as follows, where $V_{11}$ and $V_{13}$ are expressed in %.$\mu$m$^2$:

$$V_{11} = 2\pi.\left|\int_0^{r_1} \Delta n(r)r\,dr\right|$$

satisfies the equation: $V_{13} > 2.21 \times 10^4 \exp(-0.117 \times V_{11}) + 170$

- the fiber having an effective area greater than or equal to 150 $\mu$m$^2$ at a wavelength of 1550 nm.

Thus the above index difference $\Delta n_1$ makes it possible to achieve an effective area Aeff greater than or equal to 150 $\mu$m$^2$ at a wavelength of 1550 nm, the above radius $r_3$ makes it possible to reduce fabrication cost, and the above index difference $\Delta n_3$ makes it possible to obtain satisfactory trench volumes, between a minimum volume that minimizes bending losses and a maximum volume that minimizes the in-cable cut-off wavelength.

The fiber of the invention advantageously has macrobending losses less than 5 dB/m for a bend radius of 10 mm at a wavelength of 1550 nm.

The fiber of the invention advantageously has macrobending losses less than 10 dB/m for a bend radius of 10 mm at a wavelength of 1625 nm.

The fiber of the invention advantageously has macrobending losses less than 0.05 dB/100 turns for a 30 mm bend radius at a wavelength of 1625 nm.

The above relation between the volume $V_{13}$ of the trench and the volume $V_{11}$ of the central core makes it possible to guarantee that macrobending losses do not exceed the values referred to above.

The radius ($r_1$) of the central core is in the range 6.5 $\mu$m to 10 $\mu$m.

This makes it possible to achieve an effective area Aeff greater than or equal to 150 $\mu$m$^2$ at a wavelength of 1550 nm with the range of values of $\Delta n_1$ referred to above.

In particular embodiments, the difference $r_2$-$r_1$ between the radius ($r_2$) of the intermediate cladding and the radius ($r_1$) of the central core is in the range 2.0 to 10, or even in the range 3.5 to 10.

The radius ($r_2$) of the intermediate cladding ranges from 8.5 to 20.0 $\mu$m.

Firstly, the above minimum values of $r_2$-$r_1$ make it possible to maintain the chromatic dispersion and the chromatic dispersion slope within the values referred to above. In contrast, the above maximum values of $r_2$-$r_1$ make it possible to limit the outside radius $r_3$ of the trench and to guarantee that bending losses do not exceed the values referred to above.

In one particular embodiment, the difference $r_3$-$r_2$ between the radius ($r_3$) of the trench and the radius ($r_2$) of the intermediate cladding is in the range 3 $\mu$m to 12 $\mu$m.

This makes it possible to obtain a sufficiently large trench volume combined with a limited outside radius.

Embodiments of the fiber of the invention have one or more of the following features:

- the intermediate cladding has a refractive index difference ($\Delta n_2$) relative to the optical cladding in the range -1$\times$10$^{-3}$ to +1$\times$10$^{-3}$;
- the fiber has an in-cable cut-off wavelength less than or equal to 2000 nm, or even less than or equal to 1800 nm, or even less than or equal to 1600 nm;
- the fiber has a mode field diameter (MFD) greater than or equal to 13 $\mu$m at a wavelength of 1550 nm;
- the fiber has a chromatic dispersion in the range 14 ps/nm/km to 24 ps/nm/km or even in the range 14 ps/nm/km to 22 ps/nm/km at a wavelength of 1550 nm; and
- the fiber has a chromatic dispersion slope less than 0.08 ps/(nm$^2$.km) or even less than 0.070 ps/(nm$^2$.km) at a wavelength of 1550 nm.

Thus the optical fiber of the invention has lower bending losses and a smaller buried cladding outside radius than prior art fibers for comparable effective area, chromatic dispersion, chromatic dispersion slope, and fiber diameter.

The present invention also proposes an optical system receiving at least one portion of fiber of the invention.

Other features and advantages of the invention become apparent on reading the following description of particular embodiments of the invention given by way of non-limiting example and with reference to the appended drawings, in which:

- Figure 1 is a graphical representation of the theoretical profile of an optical fiber of a first particular embodiment of the present invention;
- Figure 2 is a graphical representation of the theoretical profile of an optical fiber of a second particular embodiment of the present invention; and
- Figure 3 is a graph showing two curves respectively representing the minimum and maximum volumes of the trench of the profile of an optical fiber of the invention as a function of the volume of the fiber central core.

The present invention proposes increasing the effective area Aeff of a monomode optical fiber beyond 150 $\mu m^2$ by relaxing the constraint on the in-cable cut-off wavelength $\lambda cc$, i.e. by allowing $\lambda cc$ to exceed 1450 nm.

To this end, the invention proposes using buried cladding fiber profiles.

Thus the fiber of the invention has a central core, an intermediate cladding, and a buried cladding or trench. The central core, the intermediate cladding and the buried cladding are typically produced inside a silica tube by chemical vapor deposition (CVD). The exterior optical cladding consists of the tube and the overcladding of the tube, which is generally natural or doped silica, but may equally be produced by any other deposition technique (vapor axial deposition (VAD), or outside vapor deposition (OVD)).

For example, the buried cladding may be obtained by plasma chemical vapor deposition (PCVD), making it possible to incorporate a large quantity of fluorine (or any other doping agent making it possible to reduce the refractive index compared to that of silica) to form a deeply buried cladding. Producing the buried cladding by incorporating microholes or microbubbles rather than by doping may equally be envisaged. However, for industrial fabrication doping is generally easier to control than incorporating microbubbles.

The profile of the central core of the fiber of the invention may be a step-index, trapezoidal, or graded-index profile; these profile examples do not limit the scope of the invention.

The position and volume of the buried cladding or trench may be optimized as a function of the dimensions of the central core in order:

- to minimize bending losses;
- to minimize the outside radius of the buried cladding in order not to increase fabrication cost significantly; and
- possibly to maintain the in-cable cut-off wavelength $\lambda cc$ at a value less than or equal to 2000 nm.

The volume of the trench is advantageously chosen to be both:

- sufficiently large to make it possible to obtain very low macrobending losses, namely losses less than 5 dB/m for a bend radius of 10 mm at a wavelength of 1550 nm, less than 10 dB/m for a bend radius of 10 mm at a wavelength of 1625 nm, and less than 0.05 dB/100 turns for a bend radius of 30 mm at a wavelength of 1625 nm; and
- sufficiently small to minimize the in-cable cut-off wavelength $\lambda cc$ for a given effective area Aeff.

The position of the trench is furthermore advantageously chosen so as to be both:

- sufficiently close to the central core to minimize the outside radius of the buried cladding and microbending losses; and
- sufficiently far from the core to maintain the chromatic dispersion in the range 14 ps/nm/km to 24 ps/nm/km and the chromatic dispersion slope below 0.08 ps/($nm^2$.km) or, which is even more advantageous, to maintain the chromatic dispersion in the range 14 ps/nm/km to 22 ps/nm/km and the chromatic dispersion slope below 0.07 ps/($nm^2$.km).

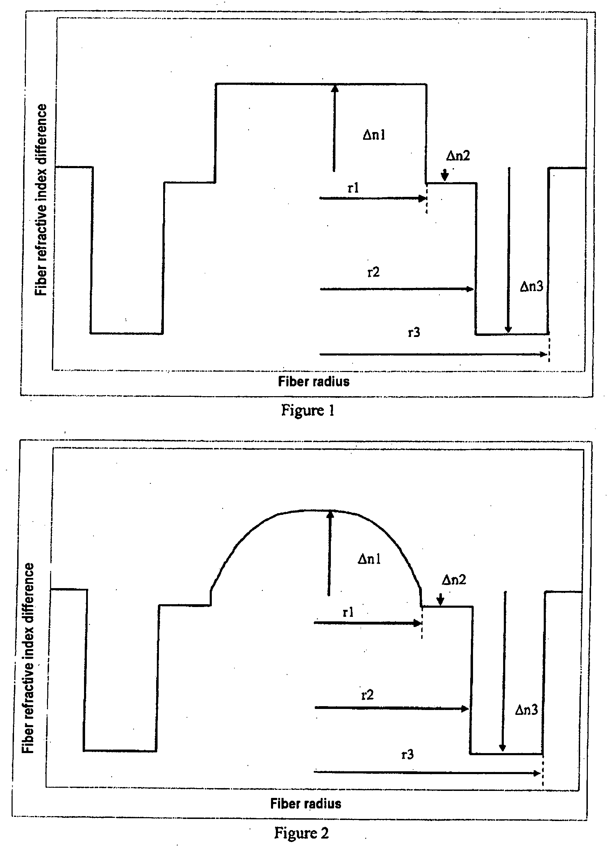

Figure 1 shows a refractive index profile for a transmission fiber of a first particular embodiment of the invention with a step-index profile (i.e. a stepped central core).

Figure 2 shows a refractive index profile for a transmission fiber of second particular embodiment of the invention with a graded-index fiber profile (i.e. an alpha-shaped central core, also known as a parabolic core).

Note that these two embodiments are merely non-limiting examples. In fact, the central core may equally well have a trapezoidal shape (for example).

The profiles shown are theoretical profiles and the fiber actually obtained by drawing a preform may have a slightly different profile.

As known in the art, an optical fiber is obtained by drawing a preform. The preform may for example consist of a glass (pure silica) tube of very high quality that forms part of the final exterior optical cladding and surrounds the central core and internal claddings of the fiber; this tube may thereafter be overcladded to increase its diameter before drawing it on a fiber-drawing tower. To fabricate the preform the tube is generally mounted horizontally in a glassmaking tower and retained at its two ends by glass rods; the tube is then rotated and heated locally to deposit components that determine the composition of the preform. This composition determines the optical characteristics of the finished fiber.

The fiber of the invention has a central core having an index difference $\Delta n_1$ relative to outer cladding providing optical cladding (the value of which index difference may either be substantially constant or depend on the distance $\underline{r}$ relative to the center of the fiber, according to whether the core has a step-index or graded-index profile, respectively), an intermediate cladding having an index difference $\Delta n_2$ relative the outer cladding (which index difference is constant and possibly negative), and buried cladding or trench having a constant negative index difference $\Delta n_3$ relative to the outer cladding. Note that throughout the description the expression index difference includes an index difference value of zero.

The refractive indices in the intermediate cladding and the trench are substantially constant over their entire length. In the Figure 1 embodiment the refractive index in the central core is substantially constant and in the Figure 2 embodiment the refractive index varies along a parabolic curve, decreasing from the center toward the exterior of the fiber. The width of the core is defined by its radius $r_1$ and the widths of the intermediate cladding and the buried cladding are defined by their respective exterior radii $r_2$ and $r_3$.

It is seen in Figure 2 that the index difference is $\Delta n_1$ at the center of the core, i.e. for r = 0, and the index difference is $\Delta n_2$ at the outside of the core, i.e. for $r=r_1$.

The reference value generally adopted to define a theoretical index profile for an optical fiber is the index value of the outer cladding. The index values of the central core, the intermediate cladding, and the trench are then presented as index differences $\Delta n_{1,2,3}$. The outer cladding generally consists of doped or undoped silica.

Each section of the fiber profile may thus be defined by integrals that link the index variation and the radius of each section of the fiber.

It is thus possible to define three volume integrals for the fiber of the invention, representing the volume $V_{11}$ of the central core, the volume $V_{12}$ of the intermediate cladding, and the volume $V_{13}$ of the trench. The term volume is not to be understood in a geometrical sense, but as a value taking account of three dimensions. These three volume integrals may be expressed as follows:

$$V_{11} = 2\pi. \left| \int_0^{r_1} \Delta n(r) r dr \right|$$

$$V_{12} = 2\pi. \left| \int_{r_1}^{r_2} \Delta n(r) r dr \right| \approx \pi.(r_2{}^2 - r_1{}^2) \times \Delta n_2$$

$$V_{13} = 2\pi. \left| \int_{r_2}^{r_3} \Delta n(r) r dr \right| \approx \pi.(r_3{}^2 - r_2{}^2) \times \Delta n_3$$

Table 1 below gives the profile characteristics of eleven examples of profiles of fibers of the invention, designated ST1, ST3, ST4, ST6, ST7, ST10, ST11, ST13, ST14, ST15 for a step-index core profile, corresponding to that shown in Figure 1, and AL2 for a graded-index or alpha-shape core profile, corresponding to that shown in Figure 2.

By way of comparison, the table also gives the profile characteristics of six examples of fiber profiles that do not conform to the invention, i.e. that depart from the parameter compromise proposed by the invention. These profiles that correspond to fibers that do not conform to the invention are marked with an asterisk and designated ST2*, ST5*, ST8*, ST9*, ST12* for the fiber profiles that do not conform to the invention having a step-index profile and AL1* for the fiber profile that does not conform to the invention having a graded-index profile. The parameter values that depart from the compromise proposed by the invention are shown in bold.

The values in the tables correspond to theoretical fiber profiles.

The first column of table I lists the examples.

The second column gives the value of alpha if the central core has an alpha-shaped profile (graded-index profile).

The next three columns give the values in $\mu$m of the radii of the central core ($r_1$), the intermediate cladding ($r_2$), and where applicable the trench ($r_3$).

The next three columns give the corresponding values of the index differences $\Delta n_1$, $\Delta n_2$, $\Delta n_3$ relative to the exterior optical cladding. The index difference values in the table are multiplied by 1000. The index values are measured at a wavelength of 633 nm.

The next two columns give the values in $\mu$m of the radii difference $r_2$-$r_1$, and $r_3$-$r_2$.

The profile examples ST2* and ST5* do not have a trench and the columns giving the values of $r_3$, $\Delta n_3$, and $r_3$-$r_2$ are not filled in for ST2* and ST5* .

The last three columns of table I (which appear below the previous columns) respectively give the volume of the central core, the volume of the trench, and the minimum volume of the trench (see equation (1) below) needed to achieve the required bending characteristics. These three series of volumes are expressed in %.$\mu$m$^2$.

Although the profile examples ST2* and ST5* have no trench (the volume of the trench is therefore zero for these examples), indicative theoretical values of the minimum volume of the trench that would be needed to achieve the required bending characteristics are given anyway, exclusively for the purpose of comparison with the profiles of fibers conforming to the invention.

| Example | alpha | $r_1$ (μm) | $r_2$ (μm) | $r_3$ (μm) | $\Delta n_1$ at 633 nm ($\times 10^3$) | $\Delta n_2$ at 633 nm ($\times 10^3$) | $\Delta n_3$ at 633 nm ($\times 10^3$) | $r_2-r_1$ (μm) | $r_3-r_2$ (μm) |
|---|---|---|---|---|---|---|---|---|---|
| ST1 | - | 7.15 | 10.81 | 16.40 | 2.9 | -0.2 | -7.7 | 3.7 | 5.6 |
| ST2* | - | 7.13 | 16.74 | - | 3.5 | -0.2 | - | 9.6 | - |
| ST3 | - | 7.28 | 11.72 | 17.58 | 3.1 | -0.2 | -6.7 | 4.4 | 5.9 |
| ST4 | - | 8.76 | 12.74 | 16.81 | 3.3 | -0.2 | -6.7 | 4.0 | 4.1 |
| ST5* | - | 8.41 | 16.94 | - | 3.0 | -0.2 | - | 8.5 | - |
| ST6 | - | 7.67 | 11.78 | 17.62 | 3.0 | -0.2 | -6.7 | 4.1 | 5.8 |
| ST7 | - | 7.90 | 11.74 | 17.21 | 2.8 | -0.2 | -5.7 | 3.8 | 5.5 |
| ST8* | - | 7.90 | 11.94 | 14.41 | 2.8 | -0.2 | -6.7 | 4.0 | **2.5** |
| ST9* | - | 7.90 | 11.74 | **25.74** | 2.8 | -0.2 | -5.7 | 3.8 | **14.0** |
| ST10 | - | 9.84 | 13.41 | 18.47 | 2.9 | -0.2 | -6.7 | 3.6 | 5.1 |
| ST11 | - | 7.28 | 15.74 | 19.60 | 3.1 | -0.2 | -6.7 | 8.5 | 3.9 |
| ST12* | - | 7.90 | 9.94 | 14.41 | 2.8 | -0.2 | -5.7 | 2.0 | 4.5 |
| ST13 | - | 7.06 | 13.20 | 16.30 | 3.5 | -0.2 | -8.0 | 6.1 | 3.1 |
| ST14 | - | 6.55 | 12.24 | 17.50 | 2.7 | -0.2 | -14.9 | 5.7 | 5.3 |
| ST15 | - | 7.90 | 16.90 | 22.37 | 2.8 | -0.2 | -4.6 | 9.0 | 5.5 |
| AL1* | 10 | 7.00 | 13.60 | 18.70 | 2.8 | 0.0 | -6.8 | 6.6 | 5.1 |
| AL2 | 10 | 7.00 | 12.00 | 17.10 | 2.8 | 0.0 | -13.0 | 5.0 | 5.1 |

| Example | Core volume (%.µm²) | Trench volume (%.µm²) | Trench minimum volume (%.µm²) |
|---|---|---|---|
| ST1 | 47 | 358 | 265 |
| ST2* | 56 | - | 203 |
| ST3 | 51 | 352 | 226 |
| ST4 | 78 | 244 | 172 |
| ST5* | 68 | - | 178 |
| ST6 | 56 | 352 | 201 |
| ST7 | 55 | 275 | 204 |
| ST8* | 55 | **134** | 204 |
| ST9* | 55 | **912** | 204 |
| ST10 | 89 | 329 | 171 |
| ST11 | 51 | 279 | 226 |
| ST12* | 55 | **189** | 204 |
| ST13 | 54 | 224 | 210 |
| ST14 | 36 | 722 | 508 |
| ST15 | 55 | 297 | 204 |
| AL1* | 36 | **352** | 517 |
| AL2 | 36 | 606 | 517 |

Table I: profile characteristics

Table II below gives the propagation characteristics for examples of profiles in fibers that conform to the invention and, by way of comparison, the same profiles in fibers that do not conform to the invention. As in table I, parameter values in Table II that depart from the compromise proposed by the invention are shown in bold.
The first column of table II lists the examples.
The next two columns respectively give the chromatic dispersion in ps/nm/km at a wavelength of 1550 nm and the chromatic dispersion slope in ps/(nm².km) at a wavelength of 1550 nm.
The next column gives of the mode field diameter (MFD) in µm at a wavelength of 1550 nm.
The next column gives the effective area Aeff in µm² at a wavelength of 1550 nm.
The next column gives the in-cable cut-off wavelength λcc in nm.
The last three columns of table II appear below the previous columns and give:

• the macrobending losses in dB/m for a bend radius of 10 mm, respectively at a wavelength of 1550 nm and at a wavelength of 1625 nm; and
• the macrobending losses in dB/100 turns for a bend radius of 30 mm at a wavelength of 1625 nm.

| Example | Dispersion at 1550 nm (ps/nm/km) | Slope at 1550 nm (ps/(nm².km)) | MFD at 1550 nm (μm) | Aeff at 1550 nm (μm²) | λcc (nm) |
|---|---|---|---|---|---|
| ST1 | 21.8 | 0.065 | 13.5 | 155 | 1462 |
| ST2* | 20.4 | 0.063 | 13.7 | 155 | **1440** |
| ST3 | 21.5 | 0.065 | 13.8 | 160 | 1498 |
| ST4 | 21.7 | 0.065 | 15.1 | 200 | 1760 |
| ST5* | 20.8 | 0.063 | 15.4 | 200 | 1501 |
| ST6 | 21.6 | 0.065 | 14.1 | 170 | 1579 |
| ST7 | 21.6 | 0.065 | 14.5 | 180 | 1525 |
| ST8* | 21.5 | 0.064 | 14.5 | 180 | 1461 |
| ST9* | 21.7 | 0.065 | 14.5 | 180 | **>2000** |
| ST10 | 21.8 | 0.065 | 16.4 | 240 | 1843 |
| ST11 | 20.5 | 0.064 | 14.3 | 167 | 1545 |
| ST12* | 22.1 | 0.064 | 13.8 | 167 | **1435** |
| ST13 | 20.9 | 0.064 | 13.5 | 152 | 1547 |
| ST14 | 21.3 | 0.066 | 13.6 | 151 | 1591 |
| ST15 | 20.7 | 0.064 | 15.2 | 189 | 1596 |
| AL1* | 20.2 | 0.065 | 14.0 | 156 | **1380** |
| AL2 | 20.5 | 0.065 | 13.9 | 154 | 1552 |

| Example | Macro-bending losses at 1550 nm R = 10 mm (dB/m) | Macro-bending losses at 1625 nm R = 10 mm (dB/m) | Macro-bending losses at 1625 nm R = 30 mm (dB/100 turns) |
|---------|---------|---------|---------|
| ST1 | 1.0 | 1.9 | $\leq 0.03$ |
| ST2* | 36 | 64 | $\leq 0.01$ |
| ST3 | 0.7 | 1.2 | $\leq 0.01$ |
| ST4 | 1.3 | 2.4 | $< 10^{-4}$ |
| ST5* | 108 | 163 | $\leq 0.02$ |
| ST6 | 0.7 | 1.2 | $\leq 0.01$ |
| ST7 | 2.6 | 4.4 | $\leq 0.02$ |
| ST8* | 25 | 38 | $\geq 0.1$ |
| ST9* | $< 10^{-2}$ | $< 10^{-2}$ | $< 10^{-3}$ |
| ST10 | 1.1 | 2.0 | $< 10^{-3}$ |
| ST11 | 1.8 | 3.2 | $\leq 0.01$ |
| ST12* | 11 | 18 | $\geq 0.1$ |
| ST13 | 1.6 | 3.1 | $< 10^{-3}$ |
| ST14 | 0.1 | 0.2 | $\leq 0.04$ |
| ST15 | 1.7 | 3.1 | $\leq 0.02$ |
| AL1* | 2.4 | 4.1 | $\geq 0.3$ |
| AL2 | 0.2 | 0.3 | $\leq 0.04$ |

Table II: propagation characteristics

The volume $V_{11}$ of the core is defined as follows:

$$V_{11} = 2\pi. \left| \int_{0}^{r_1} \Delta n(r) r dr \right|$$

The volume $V_{13}$ of the trench is defined as follows:

$$V_{13} = 2\pi.\left|\int_{r_2}^{r_3} \Delta n(r) r dr\right|$$

Accordingly, in the particular embodiments of Figures 1 and 2, in which the trench has a step-index profile, the volume of the trench is written as follows:

$$\pi(r_3^2 - r_2^2).(\Delta n_2 - \Delta n_3)$$

Note that the fibers of the eight examples that conform to the invention have an effective area greater than 150 $\mu m^2$, a chromatic dispersion less than 22 ps/nm/km, a chromatic dispersion slope less than 0.07 ps/(nm$^2$.km), macrobending losses for a bend radius of 10 mm less than 5 dB/m and 10 dB/m at wavelengths of 1550 nm and 1625 nm, respectively, and macrobending losses for a bend radius of 30 mm less than 0.05 dB per 100 turns at a wavelength of 1625 nm.

Many simulations have shown that to prevent the in-cable cut-off wavelength $\lambda cc$ exceeding 2000 nm it is preferable to choose trench volume less than 830%.$\mu m^2$.

These simulations have nevertheless also shown that it is preferable to choose trench volume sufficiently large to guarantee an acceptable level of bending losses.

The smaller the volume of the central core, the greater must be the volume of the trench. For a bend radius of 10 mm macrobending losses less than 5 dB/m and 10 dB/m are guaranteed at wavelengths of 1550 nm and 1625 nm, respectively, and for a bend radius of 30 mm macrobending losses less than 0.05 dB per 100 turns are guaranteed at a wavelength of 1625 nm if the volume $V_{13}$ (or $V_{trench}$) of the trench as a function of the volume $V_{11}$ (or $V_{core}$) of the central core satisfies the following equation, in which the volumes of the trench and the core are expressed in %.$\mu m^2$

$$V_{13} > 2.21 \times 10^4 exp(-0.117 \times V_{11}) + 170 \qquad (1)$$

i.e. satisfies the equation:

$$V_{trench} > 2.21 \times 10^4 exp(-0.117 \times V_{central\ core}) + 170 \qquad (1)$$

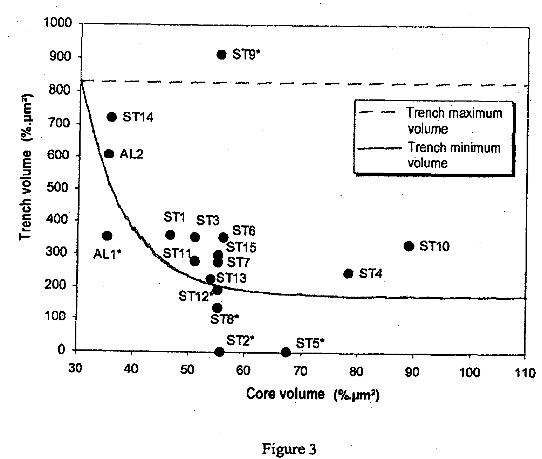

For a given central core volume, the optimized trench volume that minimizes the in-cable cut-off wavelength $\lambda cc$ while preserving the above-mentioned performance in terms of bending losses is situated just above the solid line curve labeled "Trench minimum volume" in Figure 3.

Note that:

- The fibers of examples ST2* and ST5* have profiles including a step-index central core, a cladding (internal cladding) that is not deeply buried, and an optical cladding. In other words, they have no trench. These two profiles have the same effective area Aeff as the intermediate cladding and trench profiles of examples ST1 and ST4, respectively. With Aeff = 155 $\mu m^2$ and $\lambda cc$ of the same order of magnitude, compared to example ST2*, example ST1 makes it possible to reduce macrobending losses by a factor of more than 30 for a bend radius R = 10 mm, maintaining macrobending losses for a bend radius R = 30 mm at a sufficiently low level without degrading performance in terms of microbending losses. By relaxing the constraint on $\lambda cc$, i.e. by accepting $\lambda cc$ exceeding 1700 nm, compared to example ST5*, example ST4 makes it possible to reduce macrobending losses for a bend radius R = 10 mm from approximately 100 dB/m to less than 5 dB/m at wavelengths of 1550 nm and 1625 nm, which cannot be achieved with internal cladding configurations that are not deeply buried if Aeff is of the order of 200 $\mu m^2$. Furthermore, performance in terms of microbending losses is not degraded.
- The fibers of examples ST8* and ST9* have profiles with an intermediate cladding and a trench having the same effective area as the fiber of example ST7. However, the position and volume of the trench are not optimized. The volume of the trench in example ST8* is too small given the volume of the central core in the same example and consequently in example ST8* the macrobending losses for bend radii of 10 mm and 30 mm are too high. Conversely, the volume of the trench in example ST9* is too large and consequently the value of $\lambda$cc is too high and the outside radius of the trench is too large, which penalizes fabrication cost.

- Example ST12* is close to the limit (the point representing this example on the Figure 3 graph is under the curve labeled. "Trench minimum volume" but very close to it), but is not optimized in terms of trench volume. Compared to example ST11, which has the same value of Aeff, the volume of the trench of example ST12* is too small and as a result the macrobending losses for bend radii of 10 mm and 30 mm are too high.
- The fiber of example AL1* has a profile very close to the "Fiber 8" example in Document WO-A-2008 137150 referred to in the introductory portion of this description. Once again, the volume of the trench is not optimized here as a function of the volume of the central core and, as a result, the macrobending losses for a bend radius of 30 mm are too high. In contrast, the fiber of example AL2, which conforms to the present invention, has the same core as example AL1* but the dimensions of the trench in example AL2 are optimized in order to achieve a good compromise between bending losses and in-cable cut-off wavelength.

The fibers of the invention are well suited to use in long-haul terrestrial or undersea optical systems. They preferably have microbending losses at a wavelength of 1550 nm less than 20 dB/km as measured by the TR62221 test method standardized by the IEC (Method B: Fixed Diameter Drum).

## Claims

1. A monomode optical fiber comprising, from the center toward the periphery, a central core, an intermediate cladding, a trench, and an optical cladding, wherein:

   • the central core has a radius $r_1$ in the range 6.5 $\mu$m to 10 $\mu$m and a refractive index difference $\Delta n_1$ relative to the optical cladding in the range $2.6\times10^{-3}$ to $3.5\times10^{-3}$;
   • the intermediate cladding has a radius R2 in the range 8.5 $\mu$m to 20 $\mu$m and a refractive index difference $\Delta n_2$ relative to the optical cladding;
   • the trench has a radius $r_3$ that is less than 24 $\mu$m and a refractive index difference $\Delta n_3$ relative to the optical cladding that is in the range $-15.0\times10^{-3}$ to $-4.5\times10^{-3}$, the volume $V_{13}$ of the trench, defined as follows:

$$V_{13} = 2\pi.\left|\int_{r_2}^{r_1} \Delta n(r)rdr\right|$$

   being in the range 170 %.$\mu$m$^2$ to 830 %.$\mu$m$^2$; and
   the volume $V_{13}$ of the trench as a function of the volume $V_{11}$ of the central core, defined as follows, where $V_{11}$ and $V_{13}$ are expressed in %.$\mu$m$^2$:

$$V_{11} = 2\pi.\left|\int_{0}^{r_1} \Delta n(r)rdr\right|$$

   satisfies the equation:

$$\dot{V}_{13} > 2.21\times10^4\exp(-0.117\times V_{11})+170$$

   • the fiber having an effective area greater than or equal to 150 $\mu$m$^2$ at a wavelength of 1550 nm.

2. A fiber according to claim 1, having macrobending losses less than 5 dB/m for a bend radius of 10 mm at a wavelength of 1550 nm.

3. A fiber according to any of the preceding claims, having macrobending losses less than 10 dB/m for a bend radius of 10 mm at a wavelength of 1625 nm.

4. A fiber according to any of the preceding claims, having macrobending losses less than 0.05 dB/100 turns for a 30 mm bend radius at a wavelength of 1625 nm.

5. A fiber according to any preceding claim, wherein the difference $r_2$-$r_1$ between the radius ($r_2$) of the intermediate cladding and the radius ($r_1$) of the central core is in the range 2.0 to 10, preferably in the range 3.5 to 10.

6. A fiber according to any preceding claim, wherein the difference $r_3$-$r_2$ between the radius ($r_3$) of the trench and the radius ($r_2$) of the intermediate cladding is in the range 3 $\mu$m to 12 $\mu$m.

7. A fiber according to any preceding claim, wherein the intermediate cladding has a refractive index difference ($\Delta n_2$) relative to the optical cladding in the range $-1 \times 10^{-3}$ to $+1 \times 10^{-3}$.

8. A fiber according to any preceding claim, having an in-cable cut-off wavelength less than or equal to 2000 nm, preferably less than or equal to 1800 nm, more preferably less than or equal to 1600 nm.

9. A fiber according to any preceding claim, having a mode field diameter (MFD) greater than or equal to 13 $\mu$m at a wavelength of 1550 nm.

10. A fiber according to any preceding claim, having a chromatic dispersion in the range 14 ps/nm/km to 24 ps/nm/km at a wavelength of 1550 nm, preferably in the range 14 ps/nm/km to 22 ps/nm/km at a wavelength of 1550 nm.

11. A fiber according to any preceding claim, having a chromatic dispersion slope less than 0.08 ps/(nm$^2$.km) at a wavelength of 1550 nm, preferably less than 0.070 ps/(nm$^2$.km) at a wavelength of 1550 nm.

12. An optical system receiving at least one portion of fiber according to any one of claims 1 to 11.

**Patentansprüche**

1. Monomodefaser mit, vom Zentrum zum Randbereich, einem zentralen Kern, einem zwischenliegenden Mantel, einem Graben und einem optischen Mantel, wobei:

- der zentrale Kern einen Radius $r_1$ im Bereich von 6,5 $\mu$m bis 10 $\mu$m und eine Brechungsindexdifferenz $\Delta n_1$ bezüglich des optischen Mantels im Bereich von $2,6 \times 10^{-3}$ bis $3,5 \times 10^{-3}$ aufweist;
- der zwischenliegende Mantel einen Radius $r_2$ im Bereich von 8,5 $\mu$m bis 20 $\mu$m und eine Brechungsindexdifferenz $\Delta n_2$ bezüglich des optischen Mantels aufweist;
- der Graben einen Radius $r_3$ von weniger als 24 $\mu$m und eine Brechungsindexdifferenz $\Delta n_3$ bezüglich des optischen Mantels im Bereich von $-15,0 \times 10^{-3}$ bis $-4,5 \times 10^{-3}$ aufweist, wobei das Volumen $V_{13}$ des Grabens, das wie folgt definiert ist:

$$V_{13} = 2\pi \left| \int_{r_2}^{r_3} \Delta n(r) r \, dr \right|$$

im Bereich von 170 %.$\mu$m$^2$ bis 830 %.$\mu$m$^2$ liegt; und
das Volumen $V_{13}$ des Grabens als Funktion des Volumens $V_{11}$ des zentralen Kerns, das wie folgt definiert ist, wobei $V_{11}$ und $V_{13}$ in %.$\mu$m$^2$ ausgedrückt sind:

$$V_{11} = 2\pi \left| \int_{0}^{r_1} \Delta n(r) r \, dr \right|$$

die Gleichung $V_{13} > 2{,}21 \times 10^4 \exp(-0{,}117 \times V_{11}) + 170$ erfüllt.
- die Faser eine effektive Fläche von größer oder gleich 150 $\mu m^2$ bei einer Wellenlänge von 1550 nm aufweist.

2. Faser nach Anspruch 1, die Makrobiegeverluste von weniger als 5 dB/m bei einem Biegeradius von 10 mm bei einer Wellenlänge von 1550 nm aufweist.

3. Faser nach einem der vorhergehenden Ansprüche, die Makrobiegeverluste von weniger als 10 dB/m bei einem Biegeradius von 10 mm bei einer Wellenlänge von 1625 nm aufweist.

4. Faser nach einem der vorhergehenden Ansprüche, die Makrobiegeverluste von weniger als 0,05 dB/100 Biegungen bei einem Biegeradius von 30 mm bei einer Wellenlänge von 1625 nm aufweist.

5. Faser nach einem der vorhergehenden Ansprüche, wobei die Differenz $r_2-r_1$ zwischen dem Radius ($r_2$) des zwischenliegenden Mantels und dem Radius ($r_1$) des zentralen Kerns im Bereich von 2,0 bis 10, bevorzugt im Bereich von 3,5 bis 10, liegt.

6. Faser nach einem der vorhergehenden Ansprüche, wobei die Differenz $r_3-r_2$ zwischen dem Radius ($r_3$) des Grabens und dem Radius ($r_2$) des zwischenliegenden Mantels im Bereich von 3 $\mu m$ bis 12 $\mu m$ liegt.

7. Faser nach einem der vorhergehenden Ansprüche, wobei der zwischenliegende Mantel eine Brechungsindexdifferenz ($\Delta n_2$) bezüglich des optischen Mantels im Bereich von $-1 \times 10^{-3}$ bis $+1 \times 10^{-3}$ aufweist.

8. Faser nach einem der vorhergehenden Ansprüche, die eine kabelseitige Cut-off-Wellenlänge von kleiner oder gleich 2000 nm, bevorzugt kleiner oder gleich 1800 nm, besonders bevorzugt kleiner oder gleich 1600 nm aufweist.

9. Faser nach einem der vorhergehenden Ansprüche, die einen Modenfelddurchmesser (MFD) von größer oder gleich 13 $\mu m$ bei einer Wellenlänge von 1550 nm aufweist.

10. Faser nach einem der vorhergehenden Ansprüche, die eine chromatische Dispersion im Bereich von 14 ps/nm/km bis 24 ps/nm/km bei einer Wellenlänge von 1550 nm, bevorzugt im Bereich von 14 ps/nm/km bis 22 ps/nm/km bei einer Wellenlänge von 1550 nm, aufweist.

11. Faser nach einem der vorhergehenden Ansprüche, die eine chromatische Dispersionssteigung von weniger als 0,08 ps/(nm$^2$.km) bei einer Wellenlänge von 1550 nm, bevorzugt weniger als 0,070 ps/(nm$^2$.km) bei einer Wellenlänge von 1550 nm, aufweist.

12. Optisches System, das wenigstens einen Teil einer Faser nach einem der Ansprüche 1 bis 11 aufnimmt.

**Revendications**

1. Fibre optique monomode, comprenant, depuis le centre vers la périphérie, un coeur central, une gaine intermédiaire, une tranchée et une gaine optique, dans laquelle :

   • le coeur central présentant un rayon $r_1$ compris entre 6,5 $\mu m$ et 10 $\mu m$ et une différence d'indice de réfraction $\Delta n_1$ avec la gaine optique qui est comprise entre $2{,}6 \times 10^{-3}$ et $3{,}5 \times 10^{-3}$ ;
   • la gaine intermédiaire présentant un rayon $r_2$ compris entre 8,5 $\mu m$ et 20 $\mu m$ et une différence d'indice de réfraction $\Delta n_2$ avec la gaine optique ;
   • la tranchée présentant un rayon $r_3$ qui est inférieur à 24 $\mu m$ et une différence d'indice de réfraction $\Delta n_3$ avec la gaine optique qui est comprise entre $-15{,}0 \times 10^{-3}$ et $-4{,}5 \times 10^{-3}$, le volume $V_{13}$ de la tranchée, défini comme suit :

$$V_{13} = 2\pi . \left| \int_{r_2}^{r_3} \Delta n(r) r \, dr \right|$$

étant compris entre 170 %.$\mu m^2$ et 830 %.$\mu m^2$; et

le volume $V_{13}$ de la tranchée en fonction du volume $V_{11}$ du coeur central, défini comme suit, où $V_{11}$ et $V_{13}$ sont exprimés en $\%.\mu m^2$ :

$$V_{11} = 2\pi.\left|\int_0^{r_1} \Delta n(r)rdr\right|$$

satisfait l'équation : $V_{13} > 2,21 \times 10^4 \exp(-0,117 \times V_{11})+170$
- la fibre présentant une surface effective supérieure ou égale à 150 $\mu m^2$ à la longueur d'onde de 1550 nm.

**2.** Fibre selon la revendication 1, présentant des pertes par macro-courbures inférieures à 5 dB/m pour un rayon de courbure de 10 mm à la longueur d'onde de 1550 nm.

**3.** Fibre selon l'une quelconque des revendications précédentes, présentant des pertes par macro-courbures inférieures à 10 dB/m pour un rayon de courbure de 10 mm à la longueur d'onde de 1625 nm.

**4.** Fibre selon l'une quelconque des revendications précédentes, présentant des pertes par macro-courbures inférieures à 0,05 dB/100 tours pour un rayon de courbure de 30 mm à la longueur d'onde de 1625 nm.

**5.** Fibre selon l'une quelconque des revendications précédentes, dans laquelle la différence $r_2$-$r_1$ entre le rayon ($r_2$) de la gaine intermédiaire et le rayon ($r_1$) du coeur central est comprise entre 2,0 et 10, de préférence comprise entre 3,5 et 10.

**6.** Fibre selon l'une quelconque des revendications précédentes, dans laquelle la différence $r_3$-$r_2$ entre le rayon ($r_3$) de la tranchée et le rayon ($r_2$) de la gaine intermédiaire est comprise entre 3 $\mu m$ et 12 $\mu m$.

**7.** Fibre selon l'une quelconque des revendications précédentes, dans laquelle la gaine intermédiaire présente une différence d'indice de réfraction ($\Delta n_2$) avec la gaine optique comprise entre $-1 \times 10^{-3}$ et $+1 \times 10^{-3}$.

**8.** Fibre selon l'une quelconque des revendications précédentes, présentant une longueur d'onde de coupure en câble inférieure ou égale à 2000 nm, de préférence inférieure ou égale à 1800 nm, de manière davantage préférée inférieure ou égale à 1600 nm.

**9.** Fibre selon l'une quelconque des revendications précédentes, présentant un diamètre de champ de mode (MFD) supérieur ou égal à 13 $\mu m$ à la longueur d'onde de 1550 nm.

**10.** Fibre selon l'une quelconque des revendications précédentes, présentant une dispersion chromatique comprise entre 14 ps/nm/km et 24 ps/nm/km à la longueur d'onde de 1550 nm, de préférence comprise entre 14 ps/nm/km et 22 ps/nm/km à la longueur d'onde de 1550 nm.

**11.** Fibre selon l'une quelconque des revendications précédentes, présentant une valeur de pente de dispersion chromatique inférieure à 0,08 ps/(nm$^2$.km) à la longueur d'onde de 1550 nm, de préférence inférieure à 0,070 ps/(nm$^2$.km) à la longueur d'onde de 1550 nm.

**12.** Système optique recevant au moins une portion de fibre selon l'une quelconque des revendications 1 à 11.

Figure 1

Figure 2

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6658190 A
- US 7076139 A
- US 6483975 A
- EP 1477831 A
- US 7254305 A

- EP 1978383 A
- WO 2008137150 A
- WO 2008027351 A
- US 2008279515 A